# EUROPÄISCHE PATENTSCHRIFT

(11) **EP 0 672 812 B1**
(45) Veröffentlichungstag und Bekanntmachung des Hinweises auf die Patenterteilung: **04.06.1997**
(21) Anmeldenummer: 94100857.5
(22) Anmeldetag: 21.01.1994
(51) Int. Cl.: E05F 15/16, F16H 1/16

(54) **Verstellantrieb, insbesondere Kraftfahrzeug-Fensterheberantrieb**
Adjusting drive, particularly vehicle window raising drive
Commande de déplacement , notamment pour lêve-glace de voiture

(43) Veröffentlichungstag der Anmeldung: 20.09.1995
(73) Patentinhaber: SIEMENS AKTIENGESELLSCHAFT, 80333 München (DE)
(72) Erfinder: Adam, Peter, Dipl.-Ing., D-97204 Höchberg (DE); Fiedler, Rudolf, Dipl.-Ing., D-97980 Bad Mergentheim (DE)

(56) Entgegenhaltungen:
- EP-A- 0 170 989
- DE-A- 3 519 056

## Beschreibung

Die Erfindung bezieht sich auf einen Verstellantrieb, insbesondere Kraftfahrzeug-Fensterheberantrieb.

Durch die EP-A-0 170 989 ist eine Getriebeanordnung, insbesondere eine Schneckengetriebeanordnung, mit den Merkmalen b)-d) des Anspruchs 1 bekannt; der axial in das Getriebegehäuse ragende, vorzugsweise hülsenförmige, Lagerhals ist dabei an das Getriebegehäuse angeformt. Die Mitnehmerscheibe ist mit ihrem radial inneren Lagervorsprung direkt auf eine Abtriebswelle aufgespritzt, die unmittelbar in dem Lagerhals des Getriebegehäuses gelagert ist und durch eine Durchstecköffnung des Getriebegehäuses nach axial außen hinausragt.

Der Getriebegehäusedeckel ist an seinem Außenrand in einem axial übergreifenden Paßrand des Getriebegehäuses geführt gehalten und durch eine zwischenzulegende statische Dichtung abzudichten; eine dynamische Dichtung in Form eines sogenannten 0-Dichtringes ist zwischen der Durchstecköffnung des Getriebegehäuses für den Wellenbund der Mitnehmerscheibe und dem Wellenbund vorgesehen.

Gemäß Aufgabe vorliegender Erfindung soll ein Verstellantrieb geschaffen werden, der sich einerseits durch einen geringen Bauteile-, Fertigungs- und Montageaufwand auszeichnet und andererseits eine hohe mechanische Festigkeit sowie sichere Abdichtung gegen das Eindringen von Feuchtigkeit gewährleistet. Die Lösung dieser Aufgabe gelingt durch die Lehre des Anspruchs 1; vorteilhafte Ausgestaltungen der Erfindung sind jeweils Gegenstand der Unteransprüche.

Durch die Ausbildung des Getriebegehäusedeckels als tragendes und für die drehbare bzw. verschwenkbare Lagerung von Getrieberad und Mitnehmerscheibe verantwortliches Bauteil kann einerseits das Getriebegehäuse in aufwandsarmer Kunststoff-Spritzgußtechnik mit für eine Lagerung ungeeigneter Glasfaser-Verstärkung bzw. als Aluminium-Spritzgußgehäuse ohne Notwendigkeit einer Lageraufnahmenachbereitung gefertigt und andererseits der im Vergleich zum Getriebegäuse nur eine geringere mechanische Festigkeit erfordernde Getriebegehäusedeckel entweder als einfaches Stanzbiege- bzw. Stanztiefzieh-Blechteil mit gleichzeitig geformtem Lagersitz oder aus gleitmodifizierten Kunstoff ohne für einen Lagersitz ungeeignete festigkeitserhöhende Beimischung von Glasfaser oder ähnlichem gefertigt werden.

Da die Mitnehmerscheibe mit ihrem ersten Lagervorsprung radial innerhalb des Lagerhalses des Getriebegehäusedeckels gelagert ist, kann das abtriebsseitige Ende des Lagervorsprungs stirnseitig einstückig geschlossen werden, so daß bei einfacher Entformbarkeit der vorzugsweise aus Kunststoff gespritzten Mitnehmerscheibe mit nur in axialer Richtung bewegbaren Formstempeln nur eine einzige dynamische Dichtung zwischen dem Außenumfang des Lagerhalses einerseits und der Innenumfangsfläche des zweiten Lagervorsprungs der Mitnehmerscheibe notwendig ist, um unter Zuhilfenahme einer zweiten einzigen statischen Dichtung zwischen dem Außenrand des Getriebegehäusedeckels und einer außenrandseitigen Dichtfläche des Getriebegehäuses das gesamte Getriebegehäuse gegen das Eindringen von äußerer Feuchtigkeit abdichten zu können.

Zur axial äußeren Fixierung der mittelbar bzw. unmittelbar im Endmontagezustand voreinander liegenden Bauteile des Getrieberades einerseits und der Mitnehmerscheibe andererseits ist eine Abstützung dieser Bauteile jeweils gegenüber dem benachbarten Teil des Getriebegehäuses bzw. des Getriebegehäusedeckels vorgesehen, wobei zweckmäßigerweise zur Reibminderung an die Mitnehmerscheibe bzw. an das Getrieberad bzw. an das Getriebegehäuse bzw. an den Getriebegehäusedeckel Anlaufrippen einstückig mitangeformt, insbesondere mitangespritzt, sind, die jeweils paarweise verlaufen und vorzugsweise zwischen sich Schmiermittel-Depoträume einschließen.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:

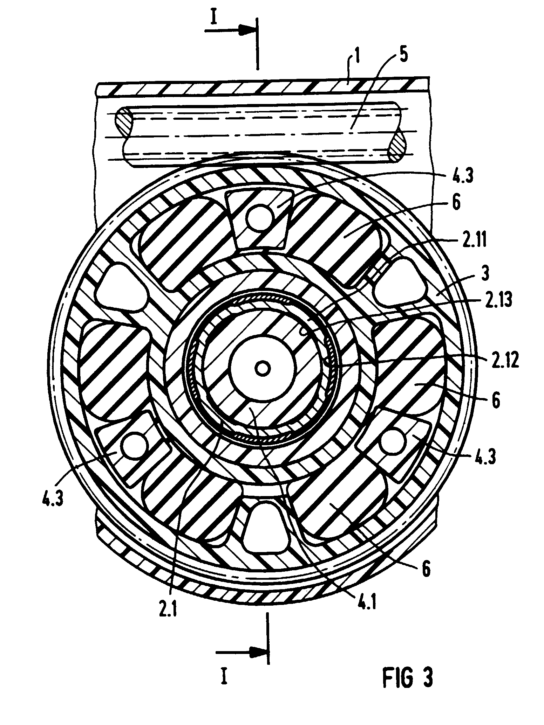

- FIG 1: in einem Schnitt durch das Getriebegehäuse gemäß Schnittverlauf I-I in FIG 3 ein erstes erfindungsgemäßes Ausführungsbeispiel eines Kraftfahrzeug-Fensterheberantriebs;
- FIG 2: in einem Schnitt durch das Getriebegehäuse ein zweites erfindungsgemäßes Ausführungsbeispiel eines Kraftfahrzeug-Fensterheberantriebs;
- FIG 3: in einem Schnitt gemäß Schnittverlauf III-III in FIG 1 das erste erfindungsgemäße Ausführungsbeispiel.

In einer z.B. durch die DE-U-89 03 714 bekannten Bauart eines Verstellantriebes ragt die als Schneckenwelle 5 verlängerte Rotorwelle eines Kommutatormotors in das an das Motorgehäuse des Kommutatormotors angeflanschte Getriebegehäuse 1, das durch einen Getriebegehäusedeckel 2 verschlossen ist. Die Schneckenwelle 5 kämmt mit einem Getrieberad 3, das dadurch mit einer Mitnehmerscheibe 4 in Mitnahmeverbindung steht, daß diese Mitnehmerscheibe 4 mit über ihren Umfang verteilten, axial vorstehenden Mitnahmezapfen 4.3 in korrespondierende Mitahmeöffnungen des Getrieberades 3 über eine Dämpfungszwichenlage 6 eingreift.

Zur drehbaren bzw. verschwenkbaren Lagerung des Getrieberades 3 bzw. der Mitnehmerscheibe 4 ist in vorteilhafter Weise einstückig an den Getriebegehäusedeckel 2 ein in das Getriebegehäuse 1 axial ragender, vorzugsweise hülsenförmiger Lagerhals 2.1 angeformt; der Getriebegehäusedeckel 2 und der einstückig angeformte Lagerhals 2.1 bestehen nach einer ersten Ausgestaltung der Erfindung aus einem metallenen Stanzbiege- bzw. Stanzzieh-Blechteil oder nach einer weiteren Ausgestaltung der Erfindung aus einem von einer festigkeitserhöhenden Beimischung freien, vorzugsweise gleitmodifizierten Kunststoff-Spritzgußteil. Eine derartige Lageraufnahme kann auch ohne Nachbearbeitung der tiefgezogenen bzw. gestanzten oder spritzgegossenen vorgenannten Bauteile lange Betriebsstandzeiten der darauf drehbaren bzw. verschwenkbaren gelagerten Bauteile gewährleisten.

In einfacher Fertigungs- und Montagetechnik ist zur Lageraufnahme bzw. Verschwenkaufnahme des Getrieberades 3 bzw. der Mitnehmerscheibe 4 an die Mitnehmerscheibe 4 konzentrisch zu dem Lagerhals 2.1 des Getriebegehäusedeckels 2 radial innen ein erster axialer, vorzugsweise hülsenförmiger, Lagervorsprung 4.1 und radial außen ein zweiter axialer, vorzugsweise hülsenförmiger, Lagervorsprung 4.2 einstückig angeformt und ist die Mitnehmerscheibe 4 mit ihrem radial inneren Lagervorsprung 4.1 auf dem Lagerhals 2.1 des Getriebegehäusedeckels 2 drehbar und das Getrieberad 3 auf dem radial äußeren Lagervorsprung 4.2 der Mitnehmerscheibe 4 tangential verschwenkbar gelagert.

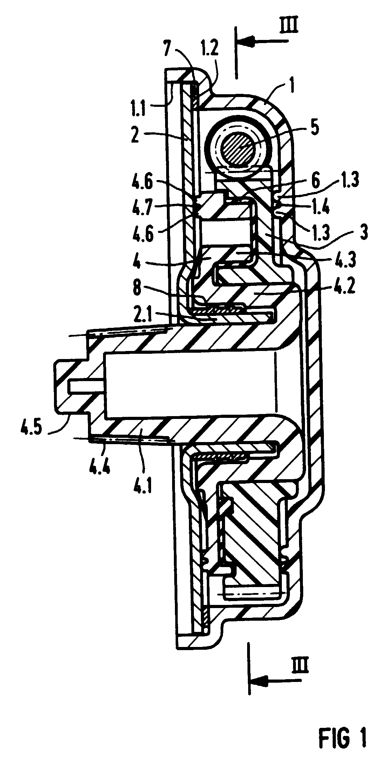

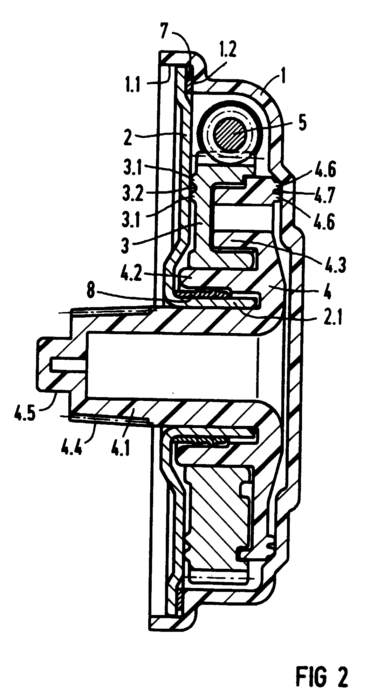

Der radial innere Lagervorsrpung 4.1 der Mitnehmerscheibe 4 erstreckt sich in insbsondere montagetechnisch günstiger Weise mit einem freien Ende in Gegenrichtung zu dem freien Ende des Lagerhalses 2.1 des Getriebegehäusedeckels 2 und ist an seinem anderen Ende über eine im wesentlichen radiale Verbindung mit dem zweiten Lagervorsprung 4.2 der Mitnehmerscheibe 4 verbunden; nach einem ersten, in FIG 1 dargestellten Ausführungsbeispiel, sind die axial von der Mitnahmescheibe 4 abstehenden, mit ihren freien Enden in das Getrieberad 3 eingreifenden Mitnahmezapfen 4.3 an ihren anderen Enden getriebegehäusedeckelseitig an dem radial äußeren Lagervorsprung 4.2 befestigt, während nach einem zweiten, in FIG 2 dargestellten Ausführungsbeispiel, die in das Getrieberad 3 eingreifenden Mitnahmezapfen 4.3 mit ihren anderen Enden getriebegehäusebodenseitig an dem radial äußeren Lagervorsprung 4, wiederum vorzugsweise einstückig mit der Mitnehmerscheibe 4, befestigt sind. Die Mitnehmerscheibe ist u.a. mit ihrer Mitnahmezapfen und Lagervorsprüngen vorzugsweise als einstückiges Kunststoff-Spritzgußteil gefertigt.

Nach einer weiteren Ausgestaltung der Erfindung ist der radial innere Lagervorsprung 4.1 der Mitnehmerscheibe 4 als Kupplung 4.4 für weitere äußere Antriebsmittel, insbesondere eines Kraftfahrzeug-Fensterheberantriebs, ausgebildet; dazu ragt der radial innere Lagervorsrpung 4.1 durch eine Öffnung des Getriebegehäusedeckels 2 nach außen heraus und ist an seinem Umfang mit einem Außenritzel 4.4 versehen, auf das z.B. eine korrespondierende Innenverzahnung einer aufsteckbaren Seilscheibe eines Kraftfahrzeug-Seilfensterhebers aufsteckbar ist. Der vorzugsweise in Hülsenform ausgebildete innere Lagervorsprung 4.1 ist topfförmig mit einem, vorzugsweise einstückigen, stirnseitigen Verschluß seiner hülsenförmigen Wandung an ihrem axialen freien Enden derart ausgebildet, daß keine Feuchtigkeit in den Innenraum des hülsenenförmigen Lagervorsprungs 4.1 eindringen kann. Gleichzeitig ist der topfbodenseitige Abschluß des hülsenförmigen Lagervorsprungs 4.1 in Form eines nasenförmigen Abstützteils 4.5 für eine getriebegehäuseexterne, weitere Abstützung bzw. Lagerung des Mitnehmers 4 ausgebildet.

Zur einfachen und mit wenigen Bauteilen gewährleisteten Abdichtung des Getriebes, insbesondere gegen Eindringen von äußerer Feuchtigkeit, ist einerseits an dem, radial in einen übergreifenden Paßrand 1.1 des Getriebegehäuses 1 eingesteckten Getriebegehäusedeckel 2 außenrandbereichsseitig eine gegen eine Dichtfläche 1.2 des Getriebegehäuses zur Anlage kommende statische Dichtung gehaltert, insbesondere angespritzt und an dem Lagerhals 2.1 außenumfangsseitig eine gegen die Innenumfangsfläche des zweiten Lagervorsprungs 4.2 der Mitnehmerscheibe 4 zur Anlage kommende dynamische Dichtung 8 gehaltert, insbesondere eingespritzt.

Ein auch bei langen Betriebsstandzeiten gewährleistetes konstantes niedriges Reibungsmoment zwischen dem im Getriebegehäuse 1 bewegten bzw. verschwenkten Bauteilen kann dadurch erreicht werden, daß der Lagerhals 2.1 mit über seinem Umfang mäanderförmig abwechselnden Erhöhungen 2.11 bzw. Vertiefungen 2.12 ausgebildet ist, die Mitnehmerscheibe 4 mit ihrem radial inneren Lagervorsprung 4.1 im Bereich der Vertiefungen 2.12 auf dem Lagerhals 2.1 drehbar gelagert ist und die Zwischenräume 2.13 zwischen der Außenumfangsfläche des radial inneren Lagervorsprung 4.1 und dem Lagerhals 2.1 im Bereich der Erhöhungen 2.11 als Schmiermittel-Depoträume vorgesehen und mit einem Schmiermittel gefüllt sind.

Beim Zusammenbau des Getriebes werden in einer sogenannten Aufbaumontage die einzelnen Bauteile in das Getriebegehäuse 1 eingelegt und dieses durch den außenrandseitig mittels des Paßrandes 1.1 eingepaßten, am Getriebegehäuses 1 anliegenden Getriebegehäusedeckels 2 verschlossen. Die Mitnehmerscheibe 4 bzw. das Getrieberad 3 liegen im Sinne einer axialen Abstützung unmittelbar bzw. mittelbar einerseits gegeneinander und andererseits an dem jeweils benachbarten Getriebegehäuse 1 bzw. Getriebegehäusedeckel 2 an, wobei in vorteilhafter Weise zur punktuellen axialen Abstützung an die Mitnehmerscheibe 4 bzw. das Getrieberad 3 bzw. das Getriebegehäuse 1 bzw. dem Getriebegehäusedeckel 2 axial vorstehende Anlaufrippen 1.3; 3.1;4.6 mit wiederum vorzugsweise zwischen zwei Anlaufrippen vorgesehenen Schmiermittel-Depoträumen angeformt sind.

Die vorliegende Erfindung ist anhand eines Fensterheberantriebes für ein Kraftfahrzeug erläutert; in gleicher Weise kann der erfindungsgemäße Verstellantrieb auch Anwendung finden bei Schiebedachantrieben, Sitzverstellantrieben und dergleichen.

## Patentansprüche

1. Verstellantrieb, insbesondere Kraftfahrzeug-Fensterheberantrieb, enthaltend ein Getriebegehäuse (1), einen das Getriebegehäuse (1) abschließenden Getriebegehäusedeckel (2) sowie einen axialen Lagerhals (2.1) zur drehbaren bzw. schwenkbaren konzentrischen Lagerung eines antriebsseitigen Getrieberades (3) und einer abtriebsseitigen Mitnehmerscheibe (4) mit den Merkmalen:
a) An dem Getriebegehäusedeckel (2) ist der in das Getriebegehäuse (1) axial ragender, vorzugsweise hülsenförmiger, Lagerhals (2.1) befestigt;
b) an der Mitnehmerscheibe (4) sind konzentrisch zu dem Lagerhals (2.1) radial innen ein erster axialer, vorzugsweise hülsenförmiger, Lagervorsprung (4.1) und radial außen ein zweiter axialer, vorzugsweise hülsenförmiger, Lagervorsprung (4.2) befestigt;
c) die Mitnehmerscheibe (4) ist mit ihrem radial inneren Lagervorsprung (4.1) auf dem Lagerhals (2.1) des Getriebegehäusedeckels (2) drehbar gelagert;
d) das Getrieberad (3) ist auf dem radial äußeren Lagervorsprung (4.2) der Mitnehmerscheibe (4) tangential verschwenkbar gelagert;
e) an dem Lagerhals (2.1) ist außenumfangsseitig eine gegen die Innenumfangsfläche des zweiten Lagervorsprungs (4.2) der Mitnehmerscheibe (4) zur Anlage kommende dynamische Dichtung (8) gehaltert, insbesondere angespritzt.

2. Verstellantrieb nach Anspruch 1 mit dem Merkmal:
f) Der Lagerhals (2.1) ist einstückiger Bestandteil des Getriebegehäusedeckels (2).

3. Verstellantrieb nach Anspruch 1 und/oder 2 mit dem Merkmal:
g) Der vorzugsweise mit dem Lagerhals (2.1) einstückige Getriebegehäusedeckel (2) besteht aus einem metallenen Stanzbiege- bzw. Stanzzieh-Blechteil.

4. Verstellantrieb nach Anspruch 1 und/oder 2 mit dem Merkmal:
h) Der vorzugsweise mit dem Lagerhals (2.1) einstückige Getriebegehäusedeckel (2) besteht aus einem von einer festigkeitserhöhenden Beimischung freien, vorzugsweise gleitmodifizierten, Kunststoff-Spritzgußteil.

5. Verstellantrieb nach Anspruch 3 oder 4 mit dem Merkmal:
Der Lagerhals (2.1) ist über seinen Umfang mäanderförmig i) mit abwechselnden Erhöhungen (2.11) und Vertiefungen (2.12) ausgebildet.

6. Verstellantrieb nach Anspruch 5 mit dem Merkmal:
j) Die Mitnehmerscheibe (4) ist mit ihrem radial inneren Lagervorsprung (4.1) im Bereich der Vertiefungen (2.12) auf dem Lagerhals (2.1) drehbar gelagert.

7. Verstellantrieb nach Anspruch 5 oder 6 mit dem Merkmal:
k) Die Zwischenräume (2.13) zwischen der Außenumfangsfläche des radial inneren Lagervorsprungs (4.1) und dem Lagerhals (2.1) im Bereich der Erhöhungen (2.11) sind als Schmiermittel-Depoträume vorgesehen.

8. verstellantrieb nach Anspruch 1 mit dem Merkmal:
l) Der radial innere Lagervorsprung (4.1) erstreckt sich mit einem freien Ende in Gegenrichtung zu dem freien Ende des Lagerhalses (2.1) und ist an seinem anderen Ende über eine im wesentlichen radiale Verbindung mit dem zweiten Lagervorsprung (4.2) verbunden.

9. verstellantrieb nach Anspruch 8 mit dem Merkmal:
m) Axial in das Getrieberad (3) eingreifende freie einen Enden von axial von der Mitnehmerscheibe (4) abstehenden Mitnahmezapfen (4.3) sind mit ihren anderen Enden getriebegehäusedeckelseitig an dem radial äußeren Lagervorsprung (4.2) befestigt.

10. Verstellantrieb nach Anspruch 8 mit dem Merkmal:
n) Axial in das Getrieberad (3) eingreifende freie Enden von axial von der Mitnehmerscheibe (4) abstehenden Mitnahmezapfen (4.3) sind mit ihren anderen Enden getriebegehäusebodenseitig an dem radial äußeren Lagervorsprung (4.2) befestigt.

11. Verstellantrieb nach einem der Ansprüche 8-10 mit dem Merkmal:
o) Der radial innere Lagervorsprung (4.1), der radial äußere Lagervorsprung (4.2), die Mitnahmezapfen (4.3), sowie deren Verbindungen untereinander sind einstückige Teile der, vorzugsweise aus einem Kunstoff-Spritzgußteil bestehenden, Mitnehmerscheibe (4).

12. Verstellantrieb nach Anspruch 1 mit dem Merkmal:
p) Das Getriebegehäuse (1) besteht aus einem Kunststoff-Spritzgußteil mit einer festigkeitserhöhenden Beimischung, insbesondere einer Glasfaser-Beimischung.

13. Verstellantrieb nach Anspruch 1 mit dem Merkmal:
q) Das Getriebegehäuse (1) besteht aus einem Aluminium-Spritzgußteil.

14. Verstellantrieb nach Anspruch 1 mit dem Merkmal:
r) Der radial innere Lagervorsprung (4.1) der Mitnehmerscheibe (4) ist als Kupplung (4.4) für weitere äußere Antriebsmittel, insbesondere eines Kraftfahrzeug-Fensterheberantriebs, ausgebildet.

15. Verstellantrieb nach Anspruch 1 mit dem Merkmal:
s) Der radial innere Lagervorsprung (4.1) weist einen, insbesondere durch den Getriebegehäusedeckel (2) ragenden, Abstützteil (4.5) für eine getriebeexterne weitere Abstützung bzw. Lagerung des Mitnehmers (4) auf.

16. Verstellantrieb nach Anspruch 1 mit dem Merkmal:
t) Der vorzugsweise hülsenförmige erste Lagervorsprung (4.1) ist topfförmig mit stirnseitigem Verschluß seiner hülsenförmigen Wandung an ihrem axialen freien Ende ausgebildet.

17. Verstellantrieb nach Anspruch 1 mit dem Merkmal:
u) An dem Getriebegehäusedeckel (2) ist außenrandbereichsseitig eine gegen eine Dichtfläche (1.2) des Getriebegehäuses (1) zur Anlage kommende statische Dichtung (7) gehaltert, insbesondere angespritzt.

18. Verstellantrieb nach Anspruch 1 mit dem Merkmal:
v) Die Mitnehmerscheibe (4) bzw. das Getrieberad (3) liegen im Sinne einer axialen Abstützung unmittelbar bzw. mittelbar einerseits gegeneinander und andererseits an dem benachbarten Getriebegehäuse (1) bzw. dem benachbarten Getriebegehäusedeckel (2) an.

19. Verstellantrieb nach Anspruch 18 mit dem Merkmal:
w) Zur axialen Abstützung sind an die Mitnehmerscheibe (4) bzw. das Getrieberad (3) bzw. das Getriebegehäuse (1) bzw. den Getriebegehäusedeckel (2) axial vorstehende Anlaufrippen (1.3;3.1;4.6) mit vorzugsweise zwischen zwei Anlaufrippen eingeschlossenem Schmiermittel-Depot angeformt.

## Claims

1. Adjustment drive, in particular motor-vehicle window-lifter drive, containing a gear housing (1), a gear-housing cover (2) which closes off the gear housing (1), and an axial bearing neck (2.1) for the rotatable and/or pivotable, concentric mounting of an input-side gear wheel (3) and an output-side drive plate (4), having the following features:
a) the preferably sleeve-shaped bearing neck (2.1), which projects axially into the gear housing (1), is fastened on the gear-housing cover (2) ;
b) fastened on the drive plate (4), concentrically with the bearing neck (2.1), are a first axial, preferably sleeve-shaped, bearing protrusion (4.1) and a second axial, preferably sleeve-shaped, bearing protrusion (4.2), the first protrusion being positioned radially towards the inside and the second protrusion being positioned radially towards the outside;
c) the drive plate (4) is mounted rotatably on the bearing neck (2.1) of the gear-housing cover (2) by means of its radially inner bearing protrusion (4.1);
d) the gear wheel (3) is mounted in a tangentially pivotable manner on the radially outer bearing protrusion (4.2) of the drive plate (4);
e) a dynamic seal (8), which comes to rest against the inner circumferential surface of the second bearing protrusion (4.2) of the drive plate (4), is secured, in particular integrally moulded, on the outer circumference of the bearing neck (2.1).

2. Adjustment drive according to Claim 1, having the following feature:
f) the bearing neck (2.1) is an integral constituent part of the gear-housing cover (2).

3. Adjustment drive according to Claim 1 and/or 2, having the following feature:
g) the gear-housing cover (2), which is preferably integral with the bearing neck (2.1), comprises a punched and bent or punched and drawn sheet-metal part.

4. Adjustment drive according to Claim 1 and/or 2, having the following feature:
h) the gear-housing cover (2), which is preferably integral with the bearing neck (2.1), comprises a plastic injection moulding which is free of a strength-increasing admixture and preferably has modified frictional properties.

5. Adjustment drive according to Claim 3 or 4, having the following feature:
i) the circumference of the bearing neck (2.1) is designed in meandering fashion with alternating elevations (2.11) and depressions (2.12).

6. Adjustment drive according to Claim 5, having the following feature:
j) the drive plate (4) is mounted rotatably on the bearing neck (2.1) in the region of the depressions (2.12), by means of its radially inner bearing protrusion (4.1).

7. Adjustment drive according to Claim 5 or 6, having the following feature:
k) the interspaces (2.13) between the outer circumferential surface of the radially inner bearing protrusion (4.1) and the bearing neck (2.1), in the region of the elevations (2.11), are provided as lubricant stores.

8. Adjustment drive according to Claim 1, having the following feature:
l) the radially inner bearing protrusion (4.1) has a
free end extending in the opposite direction to the free end of the bearing neck (2.1) and, at its other end, is connected to the second bearing protrusion (4.2) by an essentially radial connection.

9. Adjustment drive according to Claim 8, having the following feature:
m) drive stubs (4.3) which project axially from the drive plate (4) and engage axially in the gear wheel (3) by means of their free ends are fastened, by means of their other ends, on the radially outer bearing protrusion (4.2) on the gear-housing cover-side.

10. Adjustment drive according to Claim 8, having the following feature:
n) drive stubs (4.3) which project axially from the drive plate (4) and engage axially in the gear wheel (3) by means of their free ends are fastened, by means of their other ends, on the radially outer bearing protrusion (4.2) on the gear-housing-base side.

11. Adjustment drive according to one of Claims 8-10, having the following feature:
o) the radially inner bearing protrusion (4.1), the radially outer bearing protrusion (4.2), the drive stubs (4.3), and their connections to one another are integral parts of the drive plate (4), which preferably comprises a plastic injection moulding.

12. Adjustment drive according to Claim 1, having the following feature:
p) the gear housing (1) comprises a plastic injection moulding with a strength-increasing admixture, in particular a glass-fibre admixture.

13. Adjustment drive according to Claim 1, having the following feature:
q) the gear housing (1) comprises an aluminium die casting.

14. Adjustment drive according to Claim 1, having the following feature:
r) the radially inner bearing protrusion (4.1) of the drive plate (4) is designed as a coupling (4.4) for further external drive means, in particular a motor-vehicle window-lifter drive.

15. Adjustment drive according to Claim 1, having the following feature:
s) the radially inner bearing protrusion (4.1) has a supporting part (4.5) which projects, in particular, through the gear-housing cover (2) and is intended for further support or mounting for the drive element (4) outside the gear unit.

16. Adjustment drive according to Claim 1, having the following feature:
t) the preferably sleeve-shaped, first bearing protrusion (4.1) is designed in the form of a cup with its sleeve-shaped wall being closed off at its axial free end.

17. Adjustment drive according to Claim 1, having the following feature:
u) a static seal (7), which comes to rest against a sealing surface (1.2) of the gear housing (1), is secured, in particular integrally moulded, on the outer-border region of the gear-housing cover (2).

18. Adjustment drive according to Claim 1, having the following feature:
v) with the effect of axial support, the drive plate (4) and the gear wheel (3) respectively rest, directly and indirectly, against one another, on the one hand and, on the other hand, against the adjacent gear housing (1) and the adjacent gear-housing cover (2).

19. Adjustment drive according to Claim 18, having the following feature:
w) for the purpose of axial support, axially projecting abutment ribs (1.3; 3.1; 4.6), with lubricant stores preferably enclosed between two abutment ribs, are integrally formed on the drive plate (4) and gear wheel (3) and the gear housing (1) and the gearhousing cover (2).

## Revendications

1. Commande de réglage, notamment pour lève-glace de véhicule automobile, comportant un carter de transmission (1), un couvercle de carter de transmission (2) fermant le carter de transmission (1) ainsi qu'un tourillon (2.1) axial destiné au montage concentrique tournant ou pivotant d'une roue de transmission (3) côté entrée et d'un disque d'entraînement (4) côté sortie, ayant les caractéristiques suivantes :
a) au couvercle de carter de transmission (2) est fixé le tourillon (2.1) de préférence en forme de douille, s'avançant axialement dans le carter de transmission (1) ;
b) au disque d'entraînement (4) sont fixées concentriquement par rapport au tourillon (2.1), radialement à l'intérieur, une première saillie d'appui (4.1) axiale de préférence en forme de douille et, radialement à l'extérieur, une deuxième saillie d'appui (4.2) axiale de préférence en forme de douille ;
c) le disque d'entraînement (4) est, par sa saillie d'appui (4.1) radialement vers l'intérieur, monté tournant sur le tourillon (2.1) du couvercle de carter de transmission (2) ;
d) la roue de transmission (3) est montée pivotante tangentiellement sur la saillie d'appui (4.2) radialement vers l'extérieur du disque d'entraînement (4) ;
e) au tourillon (2.1) est fixé, en particulier moulé par injection, du côté de la circonférence extérieure, un joint (8) d'étanchéité dynamique venant s'appuyer contre la surface circonférentielle intérieure de la deuxième saillie d'appui (4.2) du disque d'entraînement (4).

2. Commande de réglage selon la revendication 1, ayant la caractéristique suivante:
f) le tourillon (2.1) est d'un seul tenant avec le couvercle de carter de transmission (2).

3. Commande de réglage selon la revendication 1 et/ou 2, ayant la caractéristique suivante :
g) le couvercle de carter de transmission (2), de préférence d'un seul tenant avec le tourillon (2), est constitué d'une pièce en tôle métallique découpée et pliée ou découpée et emboutie.

4. Commande de réglage selon la revendication 1 et/ou 2, ayant la caractéristique suivante :
h) le couvercle de carter de transmission (2), de préférence d'un seul tenant avec le tourillon (2), est constitué d'une pièce moulée par injection, en matière plastique, exempte d'additifs augmentant la résistance, de préférence à caractéristique de glissement modifié.

5. Commande de réglage selon la revendication 3 ou 4, ayant la caractéristique suivante:
i) le tourillon (2.1) comporte des reliefs (2.11) et des creux (2.12) alternant en forme de méandres sur sa circonférence.

6. Commande de réglage selon la revendication 5, ayant la caractéristique suivante:
j) le disque d'entraînement (4), est par sa saillie (4.1) radialement vers l'intérieur, monté tournant sur le tourillon (2.1), dans la zone des creux (2.12).

7. Commande de réglage selon la revendication 5 ou 6, ayant la caractéristique suivante :
k) les intervalles (2.13) entre la surface circonférentielle extérieure de la saillie d'appui (4.1) radialement vers l'intérieur et le tourillon (2.1), dans la zone des reliefs (2.11), prévus comme chambres de dépôt de lubrifiant.

8. Commande de réglage selon la revendication 1, ayant la caractéristique suivante :
l) la saillie d'appui (4.1) radialement vers l'intérieur s'étend par une extrémité libre en sens inverse de l'extrémité libre du tourillon (2.1) et est reliée, par son autre extrémité, par l'intermédiaire d'une liaison sensiblement radiale, à la deuxième saillie d'appui (4.2).

9. Commande de réglage selon la revendication 8, ayant la caractéristique suivante :
m) des tenons d'entraînement (4.3), qui sont éloignés axialement du disque d'entraînement (4) et dont les unes des extrémités libres pénètrent dans la roue de transmission (3), sont fixés par leurs autres extrémités, du côté du couvercle de carter de transmission, à la saillie d'appui (4.2) radialement vers l'extérieur.

10. Commande de réglage selon la revendication 8, ayant la caractéristique suivante :
n) des tenons d'entraînement (4.3), qui sont éloignés axialement du disque d'entraînement (4) et dont les extrémités libres pénètrent dans la roue de transmission (3), sont fixés par leurs autres extrémités, du côté du fond de carter de transmission, à la saillie d'appui (4.2) radialement vers l'extérieur.

11. Commande de réglage selon l'une des revendications 8 à 10, ayant la caractéristique suivante :
o) la saillie d'appui (4.1) radialement vers l'intérieur, la saillie d'appui (4.2) radialement vers l'extérieur, les tenons d'entraînement (4.3) ainsi que leurs liaisons entre eux sont des éléments d'un seul tenant avec le disque d'entraînement (4) constitué, de préférence, d'une pièce moulée par injection en matière plastique.

12. Commande de réglage selon la revendication 1, ayant la caractéristique suivante :
p) le carter de transmission (1) est constitué d'une pièce moulée par injection en matière plastique, comportant des additifs augmentant la résistance, en particulier des additifs à fibres de verre.

13. Commande de réglage selon la revendication 1, ayant la caractéristique suivante :
q) le carter de transmission (1) est constituée d'une pièce moulée par injection en aluminium.

14. Commande de réglage selon la revendication 1, ayant la caractéristique suivante :
r) la saillie d'appui (4.1) radialement vers l'intérieure du disque d'entraînement (4) est réalisée sous forme d'accouplement (4.4) pour d'autres moyens de commande extérieurs, notamment pour un dispositif d'entraînement d'un lève-glace de véhicule automobile.

15. Commande de réglage selon la revendication 1, ayant la caractéristique suivante :
s) la saillie d'appui (4.1) radialement vers l'intérieur comporte un élément d'appui (4.5) traversant notamment le couvercle de carter de transmission (2) et destiné à un autre appui ou palier extérieur à la transmission du disque d'entraînement (4).

16. Commande de réglage selon la revendication 1, ayant la caractéristique suivante :
t) la première saillie d'appui (4.1), de préférence en forme de douille est réalisée sous forme de pot, avec une fermeture frontale de sa paroi en forme de douille à son extrémité libre axiale.

17. Commande de réglage selon la revendication 1, ayant la caractéristique suivante :
u) un joint d'étanchéité statique (7) venant s'appuyer contre une surface d'étanchéité (1.2) du carter de transmission (1) est fixé, en particulier moulé par injection, au couvercle de carter de transmission (2), du côté du bord extérieur.

18. Commande de réglage selon la revendication 1, ayant la caractéristique :
v) en vue d'un appui axial, respectivement le disque d'entraînement (4) et la roue de transmission (3) s'appuient indirectement ou directement l'un contre l'autre d'une part et contre le carter de transmission (1) voisin ou le couvercle de carter de transmission (2) voisin d'autre part.

19. Commande de réglage selon la revendication 18, ayant la caractéristique suivante :
w) en vue d'un appui axial, des nervures d'attaque (1.3 ; 3.1 ; 4.6) faisant saillie axialement et comportant un dépôt de lubrifiant de préférence enfermé entre deux nervures d'attaque (1.3 ; 3.1 ; 4.6) sont issues du disque d'entraînement (4) ou de la roue de transmission (3) ou du carter de transmission (1) ou du couvercle de carter de transmission (2).
